# EUROPÄISCHE PATENTSCHRIFT

(11) **EP 2 192 337 B1**
(45) Veröffentlichungstag und Bekanntmachung des Hinweises auf die Patenterteilung: **06.04.2011**
(21) Anmeldenummer: 08020741.8
(22) Anmeldetag: 28.11.2008
(51) Int. Cl.: F16L 11/12, F16L 11/15, F16L 27/08

(54) **Flexibles Befüllrohr aus Kunststoff**
Flexible filling tube made of plastic
Tuyau de remplissage flexible en matière plastique

(43) Veröffentlichungstag der Anmeldung: 02.06.2010
(73) Patentinhaber: SCHLEMMER GMBH, 85586 Poing (DE)
(72) Erfinder: Chu,Van-Ngoc, 85586 Poing (DE)
(74) Vertreter: Geyer, Fehners & Partner

(56) Entgegenhaltungen:
- WO-A-01/68397
- US-A- 2 789 841
- US-A- 3 623 500
- US-A- 3 727 953
- US-A- 3 899 012

## Beschreibung

Die Erfindung bezieht sich auf ein flexibles Befüllrohr aus Kunststoff zum Befüllen des Vorratbehälters einer Scheibenwischanlage eines Kraftfahrzeuges, mit einem Wellrohrabschnitt vorgegebener Länge, einem an dessen einem Ende einstückig angeformten Befülltopf, der an seinem gegenüberliegenden Ende eine in einer Öffnungsebene angebrachte Einfüllöffnung aufweist und in Form eines Trichters mit einer in einer Öffnungsebene liegenden Trichteröffnung ausgebildet ist.

Bei einem solchen bekannten Befülltopf, der schon seit einiger Zeit im Markt vertrieben wird, ist der Befülltopf in Form eines Kegelstumpfes ausgebildet, dessen Mittellinie mit der Längsmittellinie des Wellrohrabschnittes zusammenfällt und dessen Öffnungsebene senkrecht zu letzterer liegt. Da im Einbauzustand gefordert wird, daß die Einfüllöffnung und damit die Öffnungsebene des Befülltopfes waagerecht im Fahrzeug eingebaut sein soll, können bei der Montage des bekannten Befüllrohres erhebliche Probleme auftreten, wenn dessen Wellrohrabschnitt an seinem dem Befülltopf abgewandten Ende bei der Einmündung in einen z. B. Vorratsbehälter einer Scheibenwaschanlage von oben her in diese an einer Stelle einmündet, an welcher die dortige Mittelachse des Wellrohrabschnittes zur Lage des anderen Endes des Wellrohrabschnittes, das an den Befülltopf angeschlossen ist, einen deutlichen Versatz aufweist, oder wenn aus anderen baulichen Gründen der Verlauf des Wellrohrabschnittes in der Nähe des Befülltopfes relativ zu diesem seitlich versetzt werden muß.

Ein weiterer Nachteil des bekannten Befüllrohres ist auch darin zu sehen, daß die maximale Größe der Einfüllöffnung des Trichters bei einer Korrugator-Herstellung, die infolge ihrer günstigen Wirtschaftlichkeit wünschenswert ist, infolge der maximal möglichen Größe der Formbacken des Korrugators beschränkt ist.

Um Formteile herzustellen, die noch größere Einfüllöffnungen und eine komplexere Profilgeometrie bei größeren Biegungen bzw. Abknickwinkeln des Wellrohrabschnittes erreichen, mußten bisher entsprechende Blasformteile eingesetzt werden, die jedoch ein erheblich teureres Herstellungsverfahren bedingen.

Ein flexibles Befüllrohr mit den baulichen Merkmalen der eingangs genannten Bauart zum Einfüllen von Öl bei Kraftfahrzeugen wird in der US 3 899 012 A beschrieben.

Ausgehend hiervon stellt die Erfindung darauf ab, ein Befüllrohr der eingangs genannten Art vorzuschlagen, das sowohl die Probleme bei einem seitlichen Versatz des Rohres bzw. bei größeren Biegungen desselben zu beheben imstande ist, als auch die Ausbildung größerer Einfüllöffnungen gestattet, und das dennoch eine Herstellung durch einen Korrugator, die viel billiger als die Herstellung von Blasformteilen ist, zuläßt.

Erfindungsgemäß wird dies bei einem flexiblen Befüllrohr der eingangs genannten Art dadurch erreicht, daß die Einfüllöffnung des Befülltopfes unter einem spitzen Winkel, besonders bevorzugt unter einem Winkel im Bereich von 30° bis 60°, insbesondere aber von 45°, zur Längsmittelachse des Wellrohrabschnittes geneigt verläuft.

Durch die schräge Lage der Einfüllöffnung des Befülltopfes zur Längsmittelachse des sich ihm anschließenden Wellrohrabschnittes läßt sich zunächst, auch bei Korrugator-Herstellung, eine größere Einfüllöffnung als im Fall des bekannten Befüllrohres, bei dem die Einfüllöffnung senkrecht zur Längsmittelachse des Wellrohrabschnittes liegt, erreichen.

Durch diese schräge Lage der Einfüllöffnung relativ zur Längsmittelachse des angeschlossenen Wellrohrabschnittes ergibt sich auch der zusätzliche Vorteil, daß der Wellrohrabschnitt dann, wenn die Öffnungsebene des Befülltopfes waagerecht im Fahrzeug eingebaut ist, nicht mehr senkrecht, sondern bereits unter einem schrägen Winkel zu ihr vom eingebauten Befülltopf unten abläuft. Ist nun ein seitlicher Versatz zwischen dem Befülltopf und dem unteren Ende des angeschlossenen Wellrohrabschnitts aus Einbaugründen erforderlich, wird schon infolge des schrägen Ablaufs des Wellrohrabschnittes unten am eingebauten Befülltopf eine erhebliche Verringerung eines eventuell noch zusätzlich erforderlichen Abbiegens des Wellrohrabschnittes erreicht, so daß die erforderlichen Krümmungen bzw. Biegungen des Wellrohrabschnittes deutlich leichter durchführbar sind als bei dem bekannten Befüllrohr. Zudem ist auch weniger Raum für die Durchführung der Biegung erforderlich als in dem Fall, in dem der Wellrohrabschnitt, wie bei dem bekannten Befüllrohr, unten senkrecht aus dem Befülltopf herausläuft und ein eventuell erforderlicher seitlicher Versatz ausschließlich durch eine Krümmung bzw. Verbiegung des Wellrohrabschnittes hergestellt werden muß. Durch geeignete Wahl des Neigungswinkels zwischen Öffnungsebene und Längsmittelachse kann auch schon im voraus für den vorgesehenen Einbaufall eine besonders günstige seitliche Anfangsausrichtung des vom Befülltopf ablaufenden Wellrohrabschnitts gewährleistet werden.

Eine vorteilhafte Ausgestaltung des erfindungsgemäßen Befüllrohres besteht auch darin, daß am Befülltopf eine verschwenkbare Klappe zum Verschließen der Einfüllöffnung des Befülltopfes befestigt ist.

Die Form des Trichters bei dem erfindungsgemäßen Befüllrohr kann in jeder geeigneten Ausgestaltung vorgenommen werden.

Besonders bevorzugt wird der Befülltopf sowohl an seinem am Wellrohrabschnitt angeschlossenen Ende, wie auch in seiner Öffnungsebene jeweils mit einem kreisförmigen Öffnungsquerschnitt ausgeführt. Dies ist insbesondere dann von Vorteil, wenn beim Einbau in ein Fahrzeug die Verwendung einer vom Fahrzeughersteller vorgeschriebenen, in aller Regel kreisförmigen Abdeckkappe zum Verschließen der Einfüllöffnung verlangt wird.

Eine andere, ebenfalls sehr vorteilhafte Ausgestaltung des erfindungsgemäßen Befüllrohres besteht auch darin, daß der Befülltopf in Form eines Kegelstumpfes mit schräg geschnittener größerer Grundfläche ausgebildet ist, wobei letztere der Einfüllöffnung des Befülltopfes entspricht. Bei dieser Ausgestaltung ist der Befülltopf an seiner Anschlußstelle am Wellrohrabschnitt wieder mit einem kreisförmigen Querschnitt versehen, während die Einfüllöffnung in der Öffnungsebene des Befülltopfes eine ovale Formgebung aufweist. Dies ist ganz besonders dann von Vorteil, wenn im Einbauzustand trotz gewünschter großer Einfüllöffnung aus Platzgründen eine kreisförmige Einfüllöffnung nicht einsetzbar wäre.

Die Erfindung bezieht sich ferner auf ein Verfahren zum Herstellen eines erfindungsgemäßen flexiblen Befüllrohres mit einem Wellrohrabschnitt und einem mit diesem an dessen einem Ende einstückig verbundenen Befülltopf entsprechend einem der weiter oben angegebenen Ausführungsformen des erfindungsgemäßen Befüllrohres.

Dabei wird erfindungsgemäß zunächst laufend ein Kunststoffrohr aus einem Extruder extrudiert, dieses danach durch einen Korrugator geführt und so geformt, daß laufend in wechselseitiger Abfolge die Formung eines Wellrohrbereiches, an diesen anschließend eines Formteils, nach diesem wieder eines weiteren Wellrohrbereiches usw. erfolgt, wobei die Wellrohrbereiche entlang einer gemeinsamen Längsmittelachse verlaufen und das Formteil eine zum Schnittpunkt derselben mit einer mittig zwischen den Wellrohrbereichen und unter einem spitzen Winkel schräg zu der Längsmittelachse liegenden Querebene punksymmetrische Form aufweist. Dabei werden nach Durchlaufen des Korrugators die beiden Wellrohrbereiche jeweils senkrecht zu ihrer Längsmittelachse, bevorzugt jeweils in der Mitte ihrer vorgegebenen Längen, und das Formteil entlang der schräg verlaufenden Querebene durchschnitten.

Das erfindungsgemäße Verfahren gestattet eine sehr preisgünstige Herstellung erfindungsgemäßer Befüllrohre mittels eines Korrugators und vermeidet so die Notwendigkeit des Einsatzes eines Blasformverfahrens für solche flexible Befüllrohre, wobei dennoch die Erzeugung größerer Querschnitte für die Trichteröffnung des Befülltopfes möglich ist.

Bevorzugt wird bei dem erfindungsgemäßen Verfahren das im Korrugator geformte Formteil nach Verlassen des Korrugators unter einem Winkel im Bereich von 30° bis 60°, insbesondere jedoch von 45°, zur Längsmittelachse der Wellrohrabschnitte durchschnitten.

Die Erfindung wird nachfolgend anhand der Zeichnungen im Prinzip beispielshalber noch näher erläutert. Es zeigen:
Fig. 1 eine Seitenansicht eines erfindungsgemäßen Befüllrohres;
Fig. 2 das Befüllrohr aus Fig. 1, jedoch mit einer in seiner Öffnungsebene angebrachten Verschwenkklappe zum Verschließen seiner Einfüllöffnung;
Fig.3 eine rein prinzipielle Darstellung eines Ausschnitts aus einem Korrugator zur Herstellung erfindungsgemäßer Befüllrohre;
Fig. 4 eine Seitenansicht von zwei über einen Formkörper miteinander verbundenen Wellrohrabschnitten, abgeschnitten von einem aus einem Korrugator laufend erzeugten Formstrang, und
Fig. 5 eine Seitenansicht des Formstranges aus Fig. 1, bei welcher der die beiden Wellrohrabschnitte verbindende Formkörper entlang einer unter einem schrägen, spitzen Winkel zur Längsachse der Wellrohrabschnitte liegenden Ebene mittig aufgeschnitten ist.

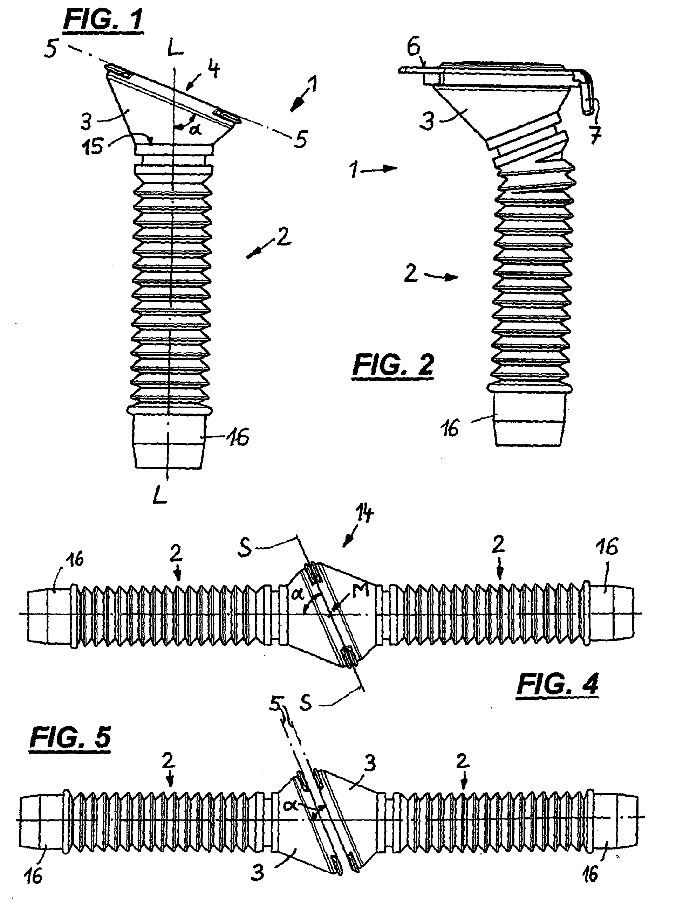

Fig. 1 zeigt in Seitenansicht ein Befüllrohr 1 aus Kunststoff, das an seiner Unterseite einen Wellrohrabschnitt 2 einer vorgegebenen Länge und, oben an diesen einstückig angeformt, einen Befülltopf 3 in Form eines Trichters aufweist.

Der Befülltopf 3 hat an seiner Oberseite eine Einfüllöffnung 4, die innerhalb einer Öffnungsebene 5 des Befülltopfes liegt (vgl. Fig. 5).

Die Öffnungsebene 5 (und damit die in ihr liegende Einfüllöffnung 4) ist unter einem spitzen Winkel α zur Längsmittelachse **L-L** des Wellrohrabschnittes 2 geneigt (vgl. Fig. 5). In Fig. 1 ist der Winkel α zwischen der Längsmittelachse **L-L** des Wellrohrabschnittes 2 und einer zur Öffnungsebene 5 parallel versetzten Ebene einer Umlaufkante des Befülltopfes 3 eingezeichnet.

Fig. 2 zeigt nun das Befüllrohr 1 aus Fig. 1, das in Fig. 2 an seiner Oberseite jedoch noch mit einem Schwenkdeckel 6 in Form einer verschwenkbar am Befülltopf 3 angebrachten Abdeckklappe ausgebildet ist, die über einen Handgriff 7 geöffnet werden kann, um durch den Befüfftopf z. B. Wasser in das Befüllrohr zur Weiterleitung an einen Wasser-Vorratsbehälter (in Fig. 2 nicht gezeigt) einzugießen, wonach die Einfüllöffnung wieder verschlossen werden kann. Dabei kann der Schwenkdeckel 6 in jeder geeigneten Weise verschwenkbar am Befülltopf 3 angelenkt sein. In dem in Fig. 2 gezeigten geschlossenen Zustand verschließt der Schwenkdeckel 6 die Einfüllöffnung 4 des Befülltopfes 3 vollständig.

Fig. 2 zeigt weiterhin den Befülltopf 3 in einer bestimmten Einbausituation, wie sie häufig auftritt, wenn ein Befüllrohr 1 z. B. zum Einfüllen von Wasser für die Scheibenreinigungsanlage eines Kraftfahrzeuges o. ä. eingesetzt wird. Im Einbauzustand wird dabei gefordert, daß die Öffnungsebene 5 des Befülltopfes 3 im Einbauzustand waagerecht liegt. Da die Längsmittellinie **L-L** unter einem spitzen Winkel α zur Öffnungsebene 5 ausgerichtet ist, bedeutet dies, daß im Einbauzustand der Wellrohrabschnitt 2 unter einem gleichen Winkel schräg zur horizontal vorgesehenen Öffnungsebene 5 des Befülltopfes 3 von diesem abläuft. Der Wellrohrabschnitt 2 erstreckt sich also nicht senkrecht unterhalb der Einfüllöffnung 4 im eingebauten Zustand, sondern läuft seitlich schräg vom Befülltopf 3 ab, wie dies Fig. 2 zeigt. Dadurch ist es möglich, einen seitlichen Versatz zwischen der unteren Auslauföffnung des Wellrohrabschnittes 2 und der oben liegenden Einfüllöffnung 4 des Befülltopfes 3 zu erreichen, ohne daß dabei der Wellrohrabschnitt 2 unbedingt gebogen werden müßte. Wenn der seitliche Versatz dieser beiden Öffnungen jedoch nicht so groß ist, daß der Wellrohrabschnitt 2 bis zu seinem freien (unteren) Ende geradlinig (aber schräg) vom Befülltopf 3 ablaufen kann, sondern wenn z. B. ein kleinerer seitlicher Versatz vorliegt, dann besteht keine Schwierigkeit, den Wellrohrabschnitt 2 so, wie dies in Fig. 2 dargestellt ist, kurz hinter seinem Auslauf aus dem Befülltopf 3 leicht zu krümmen, um den Verlauf des darunter liegenden Teilabschnittes des Wellrohrabschnittes 2 so auszurichten, daß dessen unteres Ende an der gewünschten Stelle in den z. B. Wasser-Vorratsbehälter einläuft. Gleiches gilt auch für den Fall, daß die räumliche Einbausituation noch eine zusätzliche Krümmung des bereits schräg aus dem Befülltopf 3 auslaufenden Wellrohrabschnittes 2 bedingt.

In jedem Fall ist dabei aber durch die Tatsache, daß der Wellrohrabschnitt 2 bereits schräg aus dem Befülltopf 3 ausläuft, ein seitlicher Versatz des unteren Endes des Wellrohrabschnittes 2 zur Einfüllöffnung 4 des Befülltopfes 3 leichter und insgesamt unter Ausbildung geringerer Krümmungen möglich als bei herkömmlichen Befüllrohren, bei denen die Befüllöffnung im Einbauzustand senkrecht zur Längsmittelachse des eingesetzten Wellrohrabschnittes verläuft.

Die Länge dieses Wellrohrabschnittes 2 wird so gewählt, daß sie der jeweils gegebenen Einbausituation Rechnung trägt.

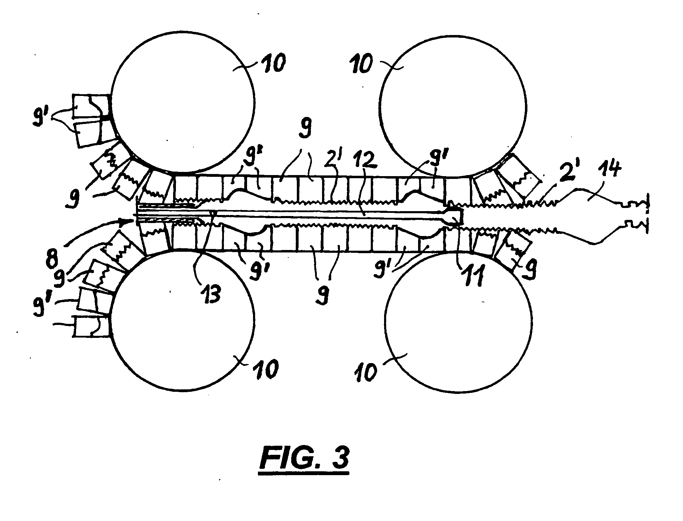

In Fig. 3 ist ganz prinzipiell eine übliche Korrugator-Vorrichtung gezeigt, wie sie für die Herstellung von Wellrohren eingesetzt wird.

In der ganz schematischen Darstellung ist zunächst der Ausgang 8 eines Extruders gezeigt, aus dem laufend ein Kunststoffrohr austritt.

Die Vorrichtung aus Fig. 3 umfaßt insbesondere zwei parallele Reihen von Formbacken 9 und 9' auf, die jeweils paarweise einander gegenüberliegend angeordnet sind und deren jeder eine sich über einen Umlaufwinkel von 180° verlaufende Innenform aufweist. Die Innenformen jedes einander gegenüberliegenden Paares von Formbacken 9 bzw. 9' bilden somit insgesamt eine vollständig umlaufende Gesamt-Innenformgebung zur Erzeugung eines durch die Backenlänge vorgegebenen axialen Abschnitts des durch die Gesamtvorrichtung erzeugten Formstranges.

Die Formbacken 9 eines Paares sind zur Erzeugung des gesamten Umfangs eines Wellrohrabschnittes 2 ausgebildet, während jeweils zwei aufeinander folgende Paare einander gegenüberliegender Formbacken 9' zur Ausbildung des Außenumfangs eines Formkörpers 14 dienen, worauf noch weiter unten eingegangen wird.

Durch zwei Paare einander gegenüberliegender, angetriebener Transporträder 10 werden die zwei Reihen von Formbacken 9 und 9' umlaufend transportiert, wobei jeweils ein Paar solcher Transporträder 10 im Bereich der Einspeisung des Kunststoffrohres am Ausgang 8 des Extruders und das andere Paar angetriebener Transporträder 10 stromabwärts im Bereich eines innerhalb des erzeugten Wellrohres vorgesehenen Verschlußstopfens 11, der auf einem aus dem Ausgang 8 des Extruders herauslaufenden Halterohr 12 sitzt, angeordnet sind (vgl. Fig. 3).

Der Verschlußstopfen 11 ist dafür vorgesehen, im Bereich zwischen dem Ausgang 8 des Extruders und dem Verschlußstopfen 11 den Aufbau eines Luftüberdruckes zuzulassen, der durch Ausblasen von Druckluft aus einer Öffnung 13 in dem Halterohr 12 erzeugt werden kann. Dieser Luftüberdruck sorgt dafür, daß das aus dem Ausgang 8 des Extruders laufend austretende heiße Kunststoffrohr sogleich in die Innenformen der Formbacken 9 und 9' eingedrückt wird, um damit seine endgültige Form zu erhalten.

Am dem Extruder gegenüberliegenden Ende der dargestellten Vorrichtung werden die Formbacken 9 und 9' um die Transporträder 10 herumgeführt und dabei von dem erzeugten Formrohr entfernt, wie dies in der Darstellung der Fig. 3 auf der rechten Seite nur ganz prinzipiell dargestellt ist. Das dort den Korrugator verlassende Formrohr besteht in der dargestellten Ausführungsform aus einer laufenden Abfolge jeweils eines Wellrohrbereiches 2', an den sich ein Formkörper 14 anschließt, der seinerseits dann wieder an einen Wellrohrbereich 2' angeschlossen ist usw.

Der aus dem Korrugator laufend austretende Formstrang ist beim Austritt bereits formstabil. Durch in Fig. 3 nicht gezeigte, hinter dem Austritt aus dem Korrugator angeordnete Schneideinrichtungen wird der zwischen zwei Formkörpern 14 sich erstreckende Wellrohrbereich 2' beim kontinuierlichen Durchlauf jeweils senkrecht zur Transportachse geschnitten und (entweder anschließend oder zwischen den beiden genannten Schnitten) der Formkörper 14 entlang einer unter dem spitzen Winkel α zur Längsachse **L-L** liegenden Schnittebene **S-S** aufgeschnitten.

Bevorzugt werden die Wellrohrbereiche 2' in einer Länge hergestellt, die der zweifachen Länge eines Wellrohrabschnittes 2 des zu erzeugenden Befüllrohres 1 entspricht, so daß die Wellrohrbereiche 2' dann in der Mitte ihrer Länge abgeschnitten werden. Die Formbacken 9, 9' können in ihrer Abfolge auch so ausgeformt sein, daß im Bereich des späteren Schnittes (senkrecht zur Wellrohrbereich-Längsachse **L-L**) ein Zwischenbereich mit glattem Umfang erzeugt wird, innerhalb dessen die Schnittebene beim späteren Schnitt liegt, wodurch an dem dem Trichter 3 gegenüberliegenden Ende des Wellrohrabschnittes 2 jeweils ein entsprechend glattes Endstück 16 erzeugt wird (vgl. Fig. 1, 2, 4 und 5).

Fig. 4 stellt einen Längenabschnitt eines aus diesem Korrugator erzeugten Produktes, bestehend aus zwei über einen solchen Formkörper 14 miteinander verbundenen Wellrohrabschnitten 2, dar, wobei dort auch die Schnittebene S-S angegeben ist, entlang der der Schrägschnitt durch den Formkörper 14 erfolgt. Wird bei dem in Fig. 4 gezeigten Längenabschnitt der Formkörper 14 entlang der Schnittebene S-S durchgeschnitten, führt dies zu der Erzeugung von zwei Befüllrohren gemäß Fig. 1.

Das ist in Fig. 5 illustriert, welche die Darstellung der Fig. 4 nach Ausführung des schrägen Schnittes durch den Formkörper 14 zeigt.

Wie leicht ersichtlich, kann durch die Schräglage der Schnittebene **S-S** eine größere Einfüllöffnung 4 als im Falle einer Schnittlage senkrecht zur Längsachse **L-L** der Wellrohrabschnitte 2 erzeugt werden.

Die Trichterform des Befülltopfes 3 kann unterschiedlich, je nach den Anforderungen im Einbauzustand, gewählt werden. So besteht die Möglichkeit, eine solche Form des Trichters 3 zu wählen, die am Trichterboden 15 (Fig. 1), von dem aus der angeschlossene Wellrohrabschnitt 2 verläuft, einen kreisförmigen Querschnitt hat und bei der auch die Einfüllöffnung 4 im Querschnitt kreisförmig ausgebildet ist.

Es kann aber auch eine Trichterform gewählt werden, die einem Kegelstumpf entspricht, der an seiner kleineren Grundfläche, nämlich am Trichterboden 15, einen kreisförmigen Querschnitt aufweist, während die schräg hierzu liegende (größere) Grundfläche in Form der Einfüllöffnung 4 eine ovale bzw. elliptische Form zeigt.

Die Außenform des Formkörpers 14 ist jedoch in jedem Fall so vorzusehen, daß sie punktsymmetrisch zum Schnittpunkt M zwischen der Längsmittelebene **L-L** der Wellrohrabschnitte 2 und der zwischen diesen jeweils mittig angeordneten schrägen Schnittebene S-S (die in ihrer relativen Ausrichtung der der Öffnungsebene 5 des Befülltopfes 3 entspricht) ist.

## Patentansprüche

1. Flexibles Befüllrohr (1) aus Kunststoff zum Befüllen des Vorratsbehälters einer Scheibenwaschanlage eines Kraftfahrzeuges,
mit einem Wellrohrabschnitt (2) vorgegebener Länge
und mit einem an dessen einem Ende einstückig angeformten, in Form eines Trichters ausgebildeten Befülltopf (3), der an seinem dem Wellrohrabschnitt (2) abgewandten Ende eine in einer Öffnungsebene (5) angebrachte Einfüllöffnung (4) aufweist,
wobei der Wellrohrabschnitt (2) vom Befülltopf (3) unter einem spitzen Winkel (α) zur Öffnungsebene (5) der Einfüllöffnung (4) geneigt abläuft und im nicht-deformierten Zustand des Befüllrohres (1) der Mittelpunkt (M) der Einfüllöffnung (4) des Befülltopfes (3) auf der Längsmittelachse (L-L) des Wellrohrabschnitts (2) liegt.

2. Flexibles Befüllrohr nach Anspruch 1, **dadurch gekennzeichnet, daß** der Befülltopf (3) sowohl an seinem am Wellrohrabschnitt (2) angeschlossenen Trichterboden (15) einen kreisförmigen Querschnitt hat, wie auch seine Einfüllöffnung (4) im Querschnitt kreisförmig ausgebildet ist.

3. Flexibles Füllrohr nach Anspruch 1, **dadurch gekennzeichnet, daß** der Befülltopf (3) in Form eines Kegelstumpfes mit schräg geschnittener (größere) Grundfläche ausgebildet ist, die die Einfüllöffnung (4) des Befülltopfes (3) bildet.

4. Flexibles Befüllrohr nach einem der Ansprüche nach 1 bis 3, **dadurch gekennzeichnet, daß** am Befülltopf (3) eine Klappe (6) zum Verschließen der Einfüllöffnung (4) verschwenkbar befestigt ist.

5. Flexibles Befüllrohr nach einem der Ansprüche 1 bis 3, **dadurch gekennzeichnet, daß** der Winkel (α) 30° bis 60°, insbesondere 45°, beträgt.

6. Verfahren zum Herstellen eines flexiblen Befüllrohres mit einem Wellrohrabschnitt (2) und einem mit diesem an dessen einem Ende einstückig verbundenen Befülltopf (3) nach einem der Ansprüche 1 bis 5, wobei zunächst aus einem Extruder laufend ein Kunststoffrohr extrudiert, hiernach dieses durch einen Korrugator geführt und dabei so geformt wird, daß in laufender Abfolge jeweils ein Wellrohrbereich (2'), an diesen anschließend ein Formteil (14), nach diesem wieder ein weiterer Wellrohrbereich (2') usw. ausgeformt werden, wobei die Wellrohrbereiche (2') entlang einer gemeinsamen Längsmittelachse (L-L) verlaufen, das Formteil (14) eine zum Schnittpunkt (M) der Längsmittelachse (L-L) der Wellrohrbereiche (2') mit einer mittig zwischen diesen und unter einem spitzen Winkel (α) schräg zu der Längsmittelachse (L-L) liegenden Querebene (S-S) punktsymmetrische Form aufweist, und daß nach Durchlaufen des Korrugators jeder Wellrohrbereich (2') jeweils entsprechend der gewünschten Länge des Wellrohrabschnittes (2) senkrecht zu seiner Längsmittelachse (L-L) und das Formteil (14) entlang der schräg verlaufenden Querebene (S-S) durchschnitten werden.

7. Verfahren nach Anspruch 6, bei dem das Formteil (14) unter einem Winkel (α) im Bereich von 30° bis 60°, insbesondere jedoch von 45°, zur Längsmittelachse (L-L) der Wellrohrbereiche (2') durchschnitten wird.

8. Verfahren nach Anspruch 6 oder 7, bei dem jeder Wellrohrbereich (2') eine Länge entsprechend der zweier Wellrohrabschnitte (2) aufweist und in der Mitte seiner Länge abgeschnitten wird.

## Claims

1. Flexible filler pipe (1) of plastic for filling the storage reservoir of a motor vehicle screen washer system,
with a corrugated pipe portion (2) of prespecified length,
and with a filler pot (3) moulded at its one end in the form of a hopper, which at its end facing away from the corrugated pipe portion has a filler opening (4) made in an opening plane (5),
wherein the corrugated pipe portion (2) runs from the filler pot (3) sloping at an acute angle (α) to the opening plane (5) of the filler opening (4) and with the filler pipe (1) in undeformed state, the centre point (M) of the filler opening (4) of the filler pot (3) lies on the longitudinal centre axis (L-L) of the corrugated pipe portion (2).

2. Flexible filler pipe according to claim 1, **characterised in that** the filler pot (3) has a circular cross-section at its hopper base (15) connected with the corrugated pipe portion (2) and its filler opening (4) is formed circular in cross-section.

3. Flexible filler pipe according to claim 1, **characterised in that** the filler pot (3) is formed as a truncated cone with obliquely cut (larger) base surface which forms the filler opening (4) of the filler pot (3).

4. Flexible filler pipe according to any of claims 1 to 3, **characterised in that** a flap (6) to close the filler opening (4) is swivel-mounted on the filler pot (3).

5. Flexible filler pipe according to any of claims 1 to 3, **characterised in that** the angle (α) is 30° to 60°, in particular 45°.

6. Method for production of a flexible filler pipe with a corrugated pipe portion (2) and a filler pot (3) firmly connected with this at its end in accordance with any of claims 1 to 5, wherein first running from an extruder a plastic pipe is extruded, then this is guided through a corrugator and thus formed so that in
succession it comprises a corrugated pipe portion (2'), followed by a moulding (14), in turn followed by a further corrugated pipe portion (2') and so on, wherein the corrugated pipe portions (2') run along a common longitudinal centre axis (L-L), the moulding (14) has a spot-symmetrical form to the intersection (M) of the longitudinal centre axis (L-L) of the corrugated centre portions (2') with a transverse plane (S-S) lying centrally between this intersection and at an acute angle (α) to the longitudinal centre axis (L-L), and that after passing through the corrugator each corrugated pipe portion (2') is cut according to the required length of the corrugated pipe portion (2) perpendicular to its longitudinal centre axis (L-L) and the moulding (14) along the oblique transverse plane (S-S).

7. Method according to claim 6, in which the moulding (14) is cut at an angle (α) in the range of 30° to 60°, in particular however 45°, to the longitudinal centre axis (L-L) of the corrugated pipe portions (2').

8. Method according to claim 6 or 7, in which each corrugated pipe portion (2') has a length corresponding to two corrugated pipe portions (2) and is cut in the centre of its length.

## Revendications

1. Tuyau de remplissage flexible (1) en matière plastique pour le remplissage d'un réservoir d'une installation de lavage de vitres d'un véhicule automobile, avec une section de tuyau ondulé (2) de longueur prédéterminée,
et avec une coupelle de remplissage (3), se présentant sous la forme d'un entonnoir, formée d'un seul tenant à une première extrémité de celui-ci, et qui présente à son extrémité située à l'opposé de la section de tuyau ondulé (2) une ouverture de remplissage (4) pratiquée dans un plan d'ouverture (5),
dans lequel la section de tuyau ondulé (2) part de la coupelle de remplissage (3) en position inclinée sous un angle aigu (α) par rapport au plan d'ouverture (5) et, dans l'état non déformé du tuyau de remplissage (1), le centre (M) de l'ouverture de remplissage (4) de la coupelle de remplissage (3) est situé sur l'axe longitudinal central (L-L) de la section de tuyau ondulé (2).

2. Tuyau de remplissage flexible selon la revendication 1, **caractérisé en ce que** la coupelle de remplissage (3) présente une section transversale circulaire, aussi bien dans son fond d'entonnoir (15) raccordé à la section de tuyau flexible (2), tout comme son ouverture de remplissage (4) a une section transversale circulaire.

3. Tuyau de remplissage flexible selon la revendication 1, **caractérisé en ce que** la coupelle de remplissage (3) est réalisée sous la forme d'un tronc de cône avec une (plus grande) base coupée en oblique, qui forme l'ouverture de remplissage (4) de la coupelle de remplissage (3).

4. Tuyau de remplissage flexible selon l'une quelconque des revendications 1 à 3, **caractérisé en ce qu'**un clapet pivotant (6) est fixé à la coupelle de remplissage (3) pour fermer l'ouverture de remplissage (4).

5. Tuyau de remplissage flexible selon l'une quelconque des revendications 1 à 3, **caractérisé en ce que** l'angle (α) vaut 30° à 60°, en particulier 45°.

6. Procédé de fabrication d'un tuyau de remplissage flexible avec une section de tuyau ondulé (2) et une coupelle de remplissage (3) assemblée d'un seul tenant à celui-ci à une première extrémité de celui-ci selon l'une quelconque des revendications 1 à 5, dans lequel on extrude d'abord en continu un tube de matière plastique hors d'une extrudeuse, on conduit ensuite celui-ci à travers une machine à onduler et on le déforme en l'occurrence de telle manière que, en une succession continue, on forme une zone de tuyau ondulé (2'), se raccordant à celle-ci une partie moulée (14), après celle-ci de nouveau une autre zone de tuyau ondulé (2') etc., dans lequel les zones de tuyau ondulé (2') s'étendent le long d'un axe longitudinal central commun (L-L), la partie moulée (14) présente une forme à symétrie ponctuelle par rapport au point d'intersection (M) de l'axe longitudinal central (L-L) des zones de tuyau ondulé (2') avec un plan transversal (S-S) situé au milieu entre celles-ci et positionné en oblique sous un angle aigu (α) par rapport à l'axe longitudinal central (L-L), et en ce que, après la traversée de la machine à onduler, on tranche chaque zone de tuyau ondulé (2') respectivement selon la longueur désirée de la section de tuyau ondulé (2) perpendiculairement à son axe longitudinal central (L-L) et la partie moulée (14) le long du plan transversal (S-S) s'étendant en oblique.

7. Procédé selon la revendication 6, dans lequel on tranche la partie moulée (14) sous un angle (α) compris dans la plage de 30° à 60°, en particulier cependant de 45°, par rapport à l'axe longitudinal central (L-L) des zones de tuyau ondulé (2').

8. Procédé selon la revendication 6 ou 7, dans lequel chaque zone de tuyau ondulé (2') présente une longueur correspondant aux deux sections de tuyau ondulé (2) et est tranchée au milieu de sa longueur.
